# EUROPÄISCHE PATENTSCHRIFT

(11) **EP 1 402 201 B1**
(45) Veröffentlichungstag und Bekanntmachung des Hinweises auf die Patenterteilung: **10.11.2004**
(21) Anmeldenummer: 02747196.0
(22) Anmeldetag: 11.06.2002
(51) Int. Cl.: F16H 1/28

(54) **STELLEINRICHTUNG FÜR EINE FAHRZEUG-LENKVORRICHTUNG**
ACTUATOR FOR A VEHICLE STEERING DEVICE
ELEMENT D'AJUSTEMENT POUR SYSTEME DE DIRECTION DE VEHICULE

(30) Priorität: 19.06.2001 DE 10129450
(43) Veröffentlichungstag der Anmeldung: 31.03.2004
(73) Patentinhaber: ROBERT BOSCH GMBH, 70442 Stuttgart (DE)
(72) Erfinder: BOCK, Michael, 81673 München (DE); NAGEL, Willi, 71686 Remseck/Hochdorf (DE)
(86) Internationale Anmeldenummer: PCT/DE2002/002079
(87) Internationale Veröffentlichungsnummer: WO 2002/103221

(56) Entgegenhaltungen:
- EP-A- 0 084 197
- DE-A- 1 962 923
- DE-A- 3 806 292
- DE-A- 10 000 221

## Beschreibung

### Stand der Technik

Die Erfindung geht aus von einer Stelleinrichtung zum überlagerten Lenkeingriff in einer Fahrzeug-Lenkvorrichtung der im Oberbegriff des Anspruchs 1 definierten Gattung. Die nicht vorveröffentlichte WO-A-0 149 553 (DE-A-10000221) zeigt diese Merkmale.

Mit einer solchen Stelleinrichtung bei der das Übertragungsverhältnis zwischen einer Änderung des Drehwinkels an der ersten Eingangswelle und der Änderung des Drehwinkels an der mit der ersten Eingangswelle koaxialen Ausgangswelle durch einen mit der zweiten Eingangswelle gekoppelten Elektromotor in Abhängigkeit von vorgegebenen Parametern, z.B. der Drehgeschwindigkeit der ersten Eingangswelle, veränderbar ist, wird der Lenkwinkel der Fahrzeugräder unabhängig vom Lenkradwinkel verändert, wodurch Vorteile hinsichtlich Fahrdynamik, Fahrsicherheit und Fahrkomfort erzielt werden.

Bei einen weiterhin bekannten Stelleinrichtung (DE 38 30 654 A1 ) weist das Überlagerungsgetriebe ein einstufiges Planetengetriebe mit Planetenträger, Planetenräder, Sonnenrad und Hohlrad auf, wobei das Sonnenrad mit der ersten Eingangswelle und das Hohlrad mit der Ausgangswelle jeweils drehfest verbunden ist und der Planetenträger über ein Schneckengetriebe mit der zweiten Eingangswelle in getrieblicher Verbindung steht. Die erste Eingangswelle ist mit dem Handlenkrad und die Ausgangswelle mit den gelenkten Fahrzeugrädern bzw. damit zwangsgekoppelten Lenkgetriebegliedern antriebsverbunden. Das von einem Elektromotor angetriebene Schneckengetriebe ist selbsthemmend ausgebildet. An der ersten Eingangswelle und an der Ausgangswelle sind Sensoren angeordnet, deren Signale die jeweilige Drehstellung der Wellen wiedergeben. Die Signale sind einer Regelvorrichtung zugeführt, welche den an der zweiten Eingangswelle angreifenden Elektromotor steuert.

### Vorteile der Erfindung

Die erfindungsgemäße Stelleinrichtung mit den Merkmalen des Anspruchs 1 hat den Vorteil, daß durch den großen Axialabstand der beiden Planetenräder eines Stufenplaneten, der so groß gewählt wird, wie es bauliche Gegebenheiten des Stellglieds zulassen, einerseits im Bereich des durchmesserreduzierten Wellenabschnitts genügend Fräserauslauf zwischen den Planetenrädern vorhanden ist und dadurch die Stufenplaneten einteilig gefertigt werden können, und andererseits eine große Lagerbasis der Stufenplaneten erreicht wird, die bei Winkel- und Achsversätzen der Sonnenräder sowie Rundlaufabweichungen der Planetenrad- und Sonnenradverzahnungen nur zu kleinen Schwenkwinkeln der Stufenplaneten führt. Durch die Einteiligkeit eines Stufenplaneten entfällt der Fügeprozeß für die beiden Planetenräder, und die Winkelstellung der Verzahnungen der beiden Planetenräder zueinander kann präzise hergestellt werden. Alle Stufenplaneten sind baugleich, d.h. die Winkelstellungen der jeweiligen Zähne der Planetenräder zueinander ist immer gleich. Dies erhöht die Fertigungsstückzahl der baugleichen Stufenplaneten und vereinfacht die Montage und Logistik. Infolge des durch die große Lagerbasis sich einstellenden nur kleinen Schwenkwinkels der Stufenplaneten zum Ausgleich der Versätze der Sonnenräder wird der Zahneingriff durch das geringe Kippen der Stufenplaneten nicht gestört, so daß anders als bei großen Schwenkwinkeln der Stufenplaneten kein hoher Verschleiß, keine große Reibung und keine zusätzliche Geräuschentwicklung auftreten. Bei einer Mißbrauchsbeanspruchung des Planetengetriebes wird der Wellenabschnitt des Stufenplaneten zwischen den beiden Planetenrädern stark auf Torsion beansprucht. Tragen nicht alle Stufenplaneten gleich, kommt es bei einem oder mehreren Stufenplaneten zu einer plastischen Torsionverformung. Nach einer geringen plastischen Verformung tragen alle Stufenplaneten gleich, so daß eine Überlastung eines einzelnen Stufenplaneten ausgeschlossen ist.

Durch die in den weiteren Ansprüchen aufgeführten Maßnahmen sind vorteilhafte Weiterbildungen und Verbesserung der im Anspruch 1 angegebenen Stelleinrichtung möglich.

Gemäß der Erfindung weist der Wellenabschnitt zwischen den beiden Planetenrädern eines Stufenplaneten eine solch große Axiallänge auf, daß bei einer als Schneckengetriebe ausgebildeten Antriebskopplung von zweiter Eingangswelle und Planetenträger, ein am Planetenträger ausgebildetes Schneckenrad des Schneckengetriebes im Bereich des Wellenabschnitts plaziert ist, die Planetenräder also mit vorzugsweise symmetrischen Axialabstand von einer durch die zweite Eingangswelle hindurchgehende Ebene außerhalb des das Schneckenrad aufnehmenden Bereichs des Planetenträgers liegen. Das hat den Vorteil, daß bei gleichzeitiger Sicherstellung einer großen Lagerbasis der Stufenplanet das Schneckengetriebe baulängenneutral im Stellglied untergebracht werde n kann.

Gemäß der Erfindung ist der Planetenträger hohlzylindrisch ausgebildet und gemäß einer bevorzugten Ausführungsform stirnseitig mit je einer Platte verschlossen. Die Drehlagerung der Stufenplaneten ist im Innern des Planetenträgers mittels Wälzlager vorgenommen. Der Planetenträger mit der vorzugsweise einstückig aufgebrachten Verzahnung des Schneckenrads des angesprochenen Schneckenradgetriebes, die Stufenplaneten sowie die am Planetenträger befestigten Planetenträgerplatten bilden so eine vormontierbare Einheit, in die nachträglich die mit der ersten Eingangswelle und der Ausgangswelle drehfest verbundenen Sonnenräder durch eine Zentralbohrung in den Planetenträgerplatten hindurch montiert werden.

In einer vorteilhaften Ausführungsform der Erfindung weist jeder Stufenplanet endseitige mit der Achse des Stufenplaneten koaxiale Lagerzapfen auf, die jeweils über ein Wälzlager in einer in jeder Planetenträgerplatte eingebrachten Lagerbohrung abgestützt sind. Die Anordnung der Wälzlager in den Planetenträgerplatten ermöglicht eine weitere Verbreitung der Lagerbasis des Stufenplaneten und stellt den für eine Wälzlagerung erforderlichen Bauraum zur Verfügung. Die Wälzlager reduzieren die Reibung des Planetengetriebes.

Sind im Planetenträger mehrere, z.B. drei, baugleiche Stufenplaneten vorhanden, so sind die in jeder Planetenträgerplatte vorgesehenen Lagerbohrungen zur Aufnahme der Lagerzapfen der Stufenplaneten um einen definierten Umfangswinkel, der geringfügig von einer gleichmäßigen Winkelteilung, bei drei Stufenplaneten von 120°, abweicht, gegeneinander versetzt angeordnet. Dies stellt sicher, daß bei baugleich ausgeführten Stufenplaneten das Planetengetriebe bei der Montage zusammenpaßt und die Sonnenräder in das Planetengetriebe eingeschoben werden können.

Um ein Zahnspiel im Planetengetriebe zu vermeiden, ist gemäß einer vorteilhaften Ausführungsform der Erfindung bei nur einem vorhandenen Stufenplaneten im Planetengetriebe in jeder Planetenträgerplatte die Lagerbohrung in Radialrichtung federnd ausgebildet, bei mehreren vorhandenen Stufenplaneten nur eine der in jeder Planetenträgerplatte erforderlichen Lagerbohrungen.

Gemäß einer alternativen Ausführungsform der Erfindung ist jeder Stufenplanet hohl ausgeführt und stützt sich über zwei voneinander maximal beabstandete Wälzlager auf einer in Aufnahmebohrungen in den Planetenträgerplatten gehaltenen Steckachse ab. Die Wälzlager sind dabei im Bereich der Planetenräder angeordnet. Diese konstruktive Gestaltung hat den Vorteil, daß einerseits die Planetenträgerplatten sehr dünn, vorzugsweise kleiner 3 mm, ausgeführt und daher mit einfachen und kostensparenden Fertigungsmethoden hergestellt werden können und andererseits die Stufenplaneten sich nachträglich in die vormontierte Baueinheit von Planetenträger mit Schneckenrad und Planetenträgerplatten einbauen lassen. Da die Wälzlager keinen zusätzlichen Bauraum beanspruchen, kann die Axiallänge des Stellglieds verkürzt werden.

Bei mindestens drei, im Planetenträger vorhandenen Stufenplaneten sind die Aufnahmebohrungen für die Steckachsen der Stufenplaneten in den Planetenträgerplatten jeweils um definierte von einer gleichen Winkelteilung abweichende Umfangswinkel zueinander versetzt angeordnet, und der Planetenträger ist über die Planetenräder der Stufenplaneten auf den beiden Sonnenrädem drehgelagert, wobei die das eine Sonnenrad tragende ersten Eingangswelle und die das zweite Sonnenrad tragende Ausgangswelle über Wälzlager im Stellergehäuse drehgelagert sind. Auch in diesem Fall ist eine der Aufnahmebohrungen für die Steckachsen in jeder Planetenträgerplatte in Radialrichtung federnd ausgebildet, wobei in jeder Planetenträgerplatte die federnde Aufnahmebohrung einen Radialabstand von der Achse der Planetenträgerplatte aufweist, die von dem gleich großen Radialabständen der anderen Aufnahmebohrungen abweicht und im unmontierten Zustand des Planetengetriebes kleiner ist. Diese konstruktive Gestaltung hat den Vorteil, daß Wälzlager zur Abstützung des Planetenträgers auf der ersten Eingangswelle und der Ausgangswelle entfallen und dadurch Kosteinsparungen erzielt werden. Da alle Stufenplaneten in die Sonnenverzahnungen gepreßt werden tragen alle mit, d.h. es erfolgt eine Leistungsverteilung über alle Stufenplaneten. Im Vergleich zu der vorgenannten konstruktiven Ausführung, bei welcher die Stufenplaneten in den Planetenträgerplatten und die Planetenträgerplatten auf Ein- und Ausgangswelle jeweils über Walzlager abgestützt sind, ist der angefederte Stufenplanet einer geringeren mechanischen Belastung ausgesetzt, so daß die zur Anfederung des Stufenplaneten erforderliche Federkraft kleiner gemacht werden kann.

Gemäß einer vorteilhaften Ausführungsform der Erfindung sind die Zähne der Sonnenräder leicht längsballig ausgeführt. Dies hat den Vorteil, daß auch der bei Versätzen der Sonnenräder sich einstellende kleine Schwenkwinkel des Stufenplaneten nicht zu Kantenträgern führt und damit auch ein evtl. noch auftretender Verschleiß, sowie eine restliche Reibung und Geräuschentwicklung weiter reduziert werden.

Gemäß einer vorteilhaften Ausführungsform der Erfindung ist die radial federnde Ausbildung der Aufnahmebohrungen für die Steckachse eines Stufenplaneten in den beiden Planetenträgerplatten jeweils durch einen die Aufnahmebohrung tragenden Federarm realisiert, der aus der Planetenträgerplatte so ausgeschnitten ist, daß sein Armquerschnitt von dem die Aufnahmebohrung tragenden freien Ende zu einer mit der Planetenträgerplatte verbundenen Armwurzel hin zunimmt. Dadurch ist der Federarm nach dem Gesetz gleicher Biegebeanspruchung gestaltet.

Die reduzierte Planetenträgerplattenstärke erfordert zur Erzielung einer gleichen Federcharakteristik zur Erzeugung der Anfederungskraft eine größere Biegelänge, die gemäß einer vorteilhaften Ausführungsform der Erfindung dadurch erzielt wird, daß die Planetenträgerplatten jeweils eine über eine kleinen Umfangswinkel sich erstreckende Ausbuchtung tragen, die bis zu der Außenkontur des Planetenträgers reicht, und daß die Armwurzel des Federarms in diese Ausbuchtung angeordnet ist. Ausbuchtung und Aussparung dienen gleichzeitig zum Ausrichten der Planetenträgerplatten zueinander.

Gemäß einer vorteilhaften Ausführungsform der Erfindung ist das Stellergehäuse mittels eines Gehäusedeckels flüssigkeitsdicht abgeschlossen und in das Stellergehäuse eine im Innern des Stellergehäuses mündende Bohrung eingebracht, die mittels eines Stopfens verschlossen ist. Dieser Stopfen vereinigt mehrere Funktionen in sich. Einerseits stellt er eine genaue Positionierung zwischen Schneckenrad und Schnecke des Schneckengetriebes unabhängig von den Einzeltoleranzen des Schneckengetriebes sicher. Andererseits verschließt er das ölgefüllte Stellergehäuse flüssigkeitsdicht, und schließlich sorgt er mittels eines an seiner Innenseite angeordneten Dauermagneten für eine Bindung des Stahlabriebs am Planetengetriebe, so daß der Verschleiß des Planetengetriebes reduziert und die Standzeit erhöht wird. Eine Einbringung der Bohrung parallel zur zweiten Eingangswelle bringt Vorteile bezüglich der Fertigungstechnik und Toleranzarmut.

### Zeichnung

Die Erfindung ist anhand von in der Zeichnung dargestellten Ausführungsbeispielen in der nachfolgenden Beschreibung näher erläutert. Es zeigen:
- Fig. 1: einen Längsschnitt eines Stellglieds zum überlagerten Lenkeingriff einer Fahrzeug-Lenkvorrichtung,
- Fig. 2: eine Stirnansicht eines Planetenträgers im Stellglied gemäß Fig. 1,
- Fig. 3: eine vergrößerte Darstellung des Ausschnitts III in Fig. 1,
- Fig. 4: einen Längsschnitt eines modifizierten Ausführungs beispiels eines Stellglieds zum überlagerten Lenkeingriff in ei ner Fahrzeug-Lenkvorrichtung,
- Fig. 5: eine Stirnansicht eines Planetenträgers im Stellglied gemäß Fig. 4,
- Fig. 6: einen Längsschnitt des Planetenträgers in Fig. 5 im Vormontagezustand.

### Beschreibung der Ausführungsbeispiele

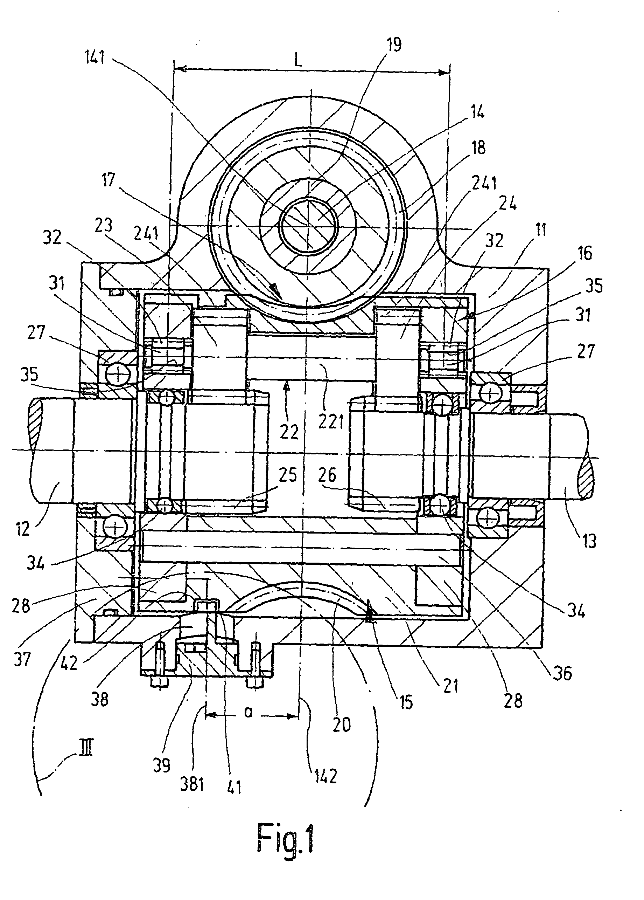

Das in Fig. 1 im Längsschnitt dargestellte Stellglied in den Ansprüchen als stelleinrichtung bezeichnet zum überlagerten Lenkeingriff in einer Fahrzeug-Lenkvorrichtung ist vorzugsweise im Lenkgetriebe integriert, kann aber auch in die Lenksäule des Fahrzeugs eingebaut werden und ist mit einem Stellergehäuse 11 über einen in Fig. 1 nicht dargestellten Lenkgetriebe oder Lenksäulenträger fest mit dem Fahrwerk oder der Karosserie verbunden. Das Stellglied weist eine erste Eingangswelle 12, die mit einem Handlenkrad gekoppelt ist, eine damit koaxiale Ausgangswelle 13, die mit den gelenkten Fahrzeugrädern bzw. damit zwangsgekoppelten Lenkgetriebegliedern antriebsverbunden ist, und eine zweite Eingangswelle 14 auf, die über einen hier nicht dargestellten Elektromotor antreibbar ist. Zwischen den genannten Wellen 12 - 14 ist ein in dem Stellergehäuse 11 aufgenommenes Überlagerungsgetriebe 15 angeordnet, bei dem das Übersetzungsverhältnis zwischen einer Änderung des Drehwinkels der ersten Eingangswelle 12 und der Änderung des Drehwinkel der Ausgangswelle 13 über die zweite Eingangswelle 14 in Abhängigkeit von vorgegebenen Parametern, z.B. der Drehgeschwindigkeit der ersten Eingangswelle 12, veränderbar ist. Jeder Eingangswelle 12 und 14 und der Ausgangswelle 13 ist ein den Drehwinkel und/oder die Drehwinkelgeschwindigkeit der jeweiligen Welle erfassender, in Fig. 1 nicht dargestellter Sensor zugeordnet. Die Meßsignale der Sensoren werden an eine Regelvorrichtung weitergeleitet, die den Elektromotor steuert.

Das Überlagerungsgetriebe 15 weist ein zweistufiges, modifiziertes Planetengetriebe 16 sowie ein selbsthemmendes Schneckengetriebe 17 auf, über das das Planetengetriebe 16 von dem Elektromotor angetrieben wird. Selbsthemmung bedeutet, daß nur der Elektromotor das Planetengetriebe antreiben kann und nicht umgekehrt. Das Schneckengetriebe 17 umfaßt eine Schnecke 18 aus Kunststoff, die entweder direkt auf die vom Elektromotor angetriebene zweite Eingangswelle 14 oder auf eine Metallhülse 19 gespritzt ist, die ihrerseits auf die zweite Eingangswelle 14 aufgepreßt ist, und ein Schneckenrad 20, das auf einem Planetenträger 21 des noch zu beschreibenden Planetengetriebes 16 sitzt und mit diesem eine Baueinheit bildet.

Das zweistufige Planetengetriebe 16 weist neben dem Planetenträger 21 mindestens einen am Planetenträger 21 drehend gelagerten Stufenplaneten 22 auf. Bevorzugt sind drei Stufenplaneten 22 vorhanden, jedoch können zur Verkleinerung des von jedem Stufenplaneten 22 zu übertragenden Drehmoments mehr als drei Stufenplaneten 22 vorgesehen werden. Jeder Stufenplanet 22 ist einteilig ausgeführt und weist zwei im Axialabstand voneinander angeordnete Planetenräder 23, 24 mit einer Verzahnung 231 bzw. 241 auf, wobei der Axialabstand der beiden Planetenräder 23, 24 möglichst groß gewählt ist und seine Grenze in baulichen Gegebenheiten findet. Die beiden Planetenräder 23, 24 sind beidseitig eines langgestreckten Wellenabschnitts 221 des Stufenplaneten 22 angeordnet, der einen Außendurchmesser aufweist, der kleiner ist als der Zahngrunddurchmesser der Verzahnungen 231, 241. Durch die Abstandsanordnungen der beiden Planetenräder 23, 24 mit dem dazwischenliegenden, durchmesserkleineren Wellenabschnitt 221 eines jeden Stufenplaneten 22 erzielt man genügend Fräserauslauf zwischen den Planetenrädern 23, 24, um den Stufenplaneten 22 einteilig zu fertigen und die Winkellage der Planetenradverzahnungen 231, 241 zueinander präzise herzustellen. Mit den Stufenplaneten 22 stehen zwei Sonnenräder 25, 26, von denen das Sonnenrad 25 drehfest mit der ersten Eingangswelle 12 und das Sonnenrad 26 drehfest mit der Ausgangswelle 13 verbunden ist, in Zahneingriff. Die erste Eingangswelle 12 und die Ausgangswelle 13 sind über Wälzlager 27, die hier als Kugellager ausgebildet sind, im Stellergehäuse 11 drehgelagert.

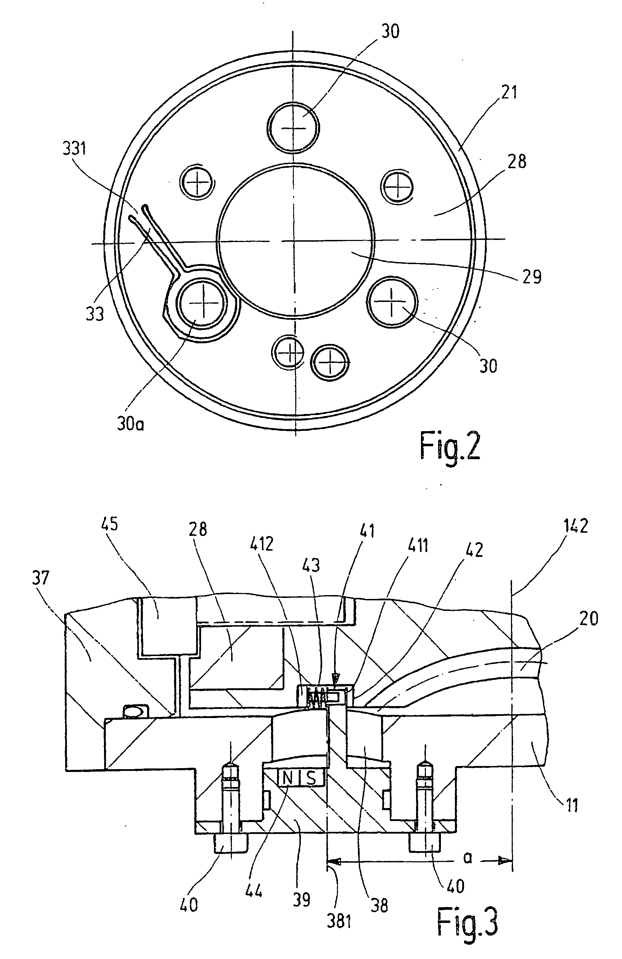

Der Planetenträger 21 ist hohlzylindrisch ausgebildet und stirnseitig mit je einer Planetenträgerplatte 28 aus gehärtetem Federstahl abgedeckt. Jeder Planetenträgerplatte 28 weist eine Zentralbohrung 29 (Fig. 2) sowie auf einem Teilerkreis angeordnete Lagerbohrungen 30 auf, deren Zahl der Anzahl der Stufenplaneten 22 entspricht. Der Durchmesser der Zentralbohrung 29 ist gerade so groß, daß die beiden Sonnenräder 25, 26 nachträglich bei der Montage in das vormontierte Planetengetriebe 16 eingepreßt werden können. Wie in Fig. 1 zu sehen ist, weist jeder Stufenplanet 22 zwei endseitige Lagerzapfen 31 auf, die in je einer der Lagerbohrungen 30 in den beiden Planetenträgerplatten 28 hineinragen und in der Lagerbohrung 30 sich über ein Wälzlager 32 abstützen. Im Ausführungsbeispiel der Fig. 1 und 2 sind in jeder Planetenträgerplatte 28 entsprechend den drei im Innern des Planetenträgers 21 vorhandenen Stufenplaneten 22 drei um einen definierten Umfangswinkel gegeneinander versetzt angeordnete Lagerbohrungen 30 vorhanden. Die drei Abstandswinkel zwischen den Lagerbohrungen 30 sind dabei geringfügig ungleich 120°, was die Voraussetzung dafür ist, daß die baugleichen Stufenplaneten 22 mit gleichen Winkelstellung der jeweiligen Zähne der Planetenräder 23, 24 mit den Sonnenrädern 25, 26 zusammenpassen und die Sonnenräder 25, 26 sich in die vormontierte Baueinheit des Planetenträgers 21 einschieben lassen. Eine der Lagerbohrungen 30, in Fig. 2 mit 30a bezeichnet, ist in Radialrichtung federnd ausgebildet. Dies wird dadurch erreicht, daß die Lagerbohrung 30a in einem Federarm 33 eingebracht ist, der aus der Planetenträgerplatte 28 ausgeschnitten ist und lediglich mit einer Armwurzel 331 mit der Planetenträgerplatte 28 verbunden ist. Der Querschnitt des Federarms 33 nimmt dabei von dem die Lagerbohrung 30a tragenden Ende zur Armwurzel 331 hin zu, wodurch der Federarm 33 eine biegespannungsoptimierte Form erhält. Die angefederte Lagerbohrung 30a hat einen radialen Abstand von der Achse der Planetenträgerplatte 28, der von dem konstanten Radialabstand der beiden nicht angefederten Lagerbohrungen 30 abweicht und im entlasteten Zustand kleiner ist. Im zusammengebauten Zustand des Planetenträgers 22 wird der Federarm 33 ausgelenkt und bringt eine zur Achse des Planetenträgers 21 hin gerich tete radiale Federspannung auf, die eine Spielfreiheit des Planetengetriebes 16 sicherstellt. Der Werkstoff Federstahl der Planetenträgerplatte 28 ist idealer, hochbelastbarer Werkstoff für den Federarm 33. In jeder Planetenträgerplatte 28 ist noch ein Wälzlager 34 angeordnet. Über diese beiden Wälzlager 34 stützt sich der Planetenträger 21 einerseits auf der ersten Eingangswelle 12 und andererseits auf der damit koaxialen Ausgangswelle 13 ab.

Wie bereits erwähnt sind die Lagerzapfen 31 der Stufenplaneten 22 in den Lagerbohrungen 30 (Fig. 2) der Planetenträgerplatten 28 mittels Wälzlager 27 drehgelagert. Hierzu sind auf den Lagerzapfen 31 ringförmige Lagernuten 35 eingestochen, in die die Wälzlager 32 in Form von Nadelkränzen eingeklipst werden. Der Werkstoff Federstahl der Planetenträgerplatten 28 ist hart genug, um die Laufflächen für die Wälzkörper in Form von Nadeln zu bilden. Bei der Montage des Planetenträgers 21 werden zunächst die Nadelkränze in die Lagernuten 35 eingeklipst, so daß sie während der Montage nicht mehr abfallen könne n. Die Stufenplaneten 22 werden im Planetenträger 21 verbaut, wobei die beiden Planetenträgerplatten 28 über einen Zentrierstift 36 (Fig. 1) in Drehrichtung zueinander ausgerichtet werden. Die Planetenträgerplatten 28 werden durch axial eingedrehte Schrauben 45, nur in Fig. 3 dargestellt, am Planetenträger 21 gehalten. Nunmehr werden die Sonnenräder 25, 26 durch die Zentralbohrungen 29 in den Planetenträgerplatten 28 hindurchgeführt, wobei die Verzahnungen der Sonnenräder 25, 26 am freien Ende außerhalb des Eingriffsbereichs der Planetenräder 23, 24 angefast sind, so daß die Verzahnungen der Sonnenräder 25, 26 leicht in die Verzahnungen 231, 241 der Planetenräder 23, 24 einführbar sind.

Für die Funktion des Planetengetriebes 16 genügt an sich ein einziger Stufenplanet 22, und zwar der in der angefederten Lagerbohrung 30a in den beiden Planetenträgerplatten 28 aufgenommene. Die beiden weiteren Stufenplaneten 22 laufen bei niedriger Belastung mit Flankenspiel in der Verzahnung lastfrei mit, tragen aber bei höherer Belastung mit.

Durch die beschriebene Abstandsanordnung der Planetenräder 23, 24 mit dazwischenliegenden, durchmesserkleineren Wellenabschnitt 221 der Stufenplaneten 22 und der Integration der Walzlager 32 in den Planetenträgerplatten 28 wird vorteilhaft eine große Lagerbasis L der Stufenplaneten 22 erreicht, die in Fig. 1 mit L gekennzeichnet ist. Diese große Lagerbasis führt im Falle von Winkel- und Achsversätzen der Sonnenräder 25, 26 sowie von Rundlaufabweichungen der Planetenrad- und Sonnenverzahnungen, die von den Stufenplaneten 22 durch Kippen ausgeglichen werden, nur zu kleinen Schwenkwinkeln der Stufenplaneten 22, so daß Kantenträger mit der Folge eines hohen Verschleißes, einer großen Reibung und einer zusätzlichen Geräuschentwicklung weitgehend reduziert werden. Zusätzlich sind die Zähne der Sonnenräder 25, 26 leicht längsballig ausgeführt, d.h. daß die Zahnflanken in Axialrichtung von der Mitte des Verzahnungsabschnitts zu den beiden Enden des Verzahnungsabschnitts hin bogenförmig abfallen. Durch diese Längsballigkeit führt auch der verbleibende kleine Kippwinkel der Stufenplaneten 22 in keinem Fall zu einem Kantenträger mit den beschriebenen Folgen.

Durch die Abstandsanordnung der Planetenräder 23, 24 der Stufenplaneten 22 wird noch ein weiterer Vorteil erzielt. Üblicherweise tragen nicht alle Stufenplaneten 22 gleich, d.h. durch Toleranzen übertragen einige Stufenplaneten 22 ein geringeres Drehmoment als die anderen. Bei einer im Fahrbetrie b auftretenden Überlastung in der Lenkung wird der relativ lange Wellena bschnitt 221 zwischen den beiden Planetenrädern 23, 24 stark auf Torsion beansprucht. Tragen nicht alle Stufenplaneten 22 gleich, kommt es bei einem oder m ehreren Stufenplaneten 22 zu einer plastischen Torsionsverformung des Wellen abschnitts 221. Nach dieser bleibenden Verformung tragen dann alle Stufenplaneten 22 gleich und übertragen ein gleiches Drehmoment. Die Anordnung der Wälzlager 32 in den Planetenträgerplatten 28 ermöglicht noch eine Verbreiterung der Lagerbasis L der Stufenplaneten 22, wobei die relativ dick ausgeführten Planetenträgerplatten 28 einen ausreichenden Bauraum für die Wälzlager 32 zur Verfügung stellen. Die Wälzlagerung der Stufenplaneten 22 reduziert die Reibung im Planetengetriebe 16. Durch die große Lagerbasis L, gepaart mit der spielarmer Wälzlagerung können an den Planetenrädern 23, 24 angreifende Tangentialkräfte die Stufenplaneten 22 nicht zum Kippen bringen, so daß ein steifes Planetengetriebe 16 erzielt wird.

Das topfförmig ausgebildete Stellergehäuse 11 ist mittels eines Gehäusedeckels 37 flüssigkeitsdicht verschlossen, wobei das die erste Eingangswelle 12 aufnehmende Wälzlager 27 in dem Gehäusedeckel 37 integriert ist. Das Stellergehäuse 11 weist eine Bohrung 38 auf. Vorzugsweise ist die Boh rung 38 parallel zur zweiten Eingangswelle 14 in das Stellergehäuse 11 eingebracht ist, wobei ihre Bohrungsachse 381 (Fig. 1 und 3) einen toleranzengen Abstand a von einer durch die Achse 141 der zweiten Eingangswelle 14 verlaufenden Ebene 142 aufweist. Die im Innern des Stellergehäuses 11 mündende Bohrung 38 ist mittels eines Stopfens 39 flüssigkeitsdicht verschließbar, wobei der Stopfen 39 nach seinem Einsetzen in die Bohrung 38 mittels Schrauben 40 am Stellergehäuse 11 befestigt ist. In Fig. 1 sind Bohrung 38 und Stopfen 39 um 90° in die Zeichenebene hineingedreht dargestellt. Fig. 3 zeigt eine gleiche Darstellung in Vergrößerung. Der Stopfen 39 vereinigt mehrere Funktionen in sich. Eine der Funktionen ist die Axialführung von Planetenträger 21 mit daran ausgebildetem Schneckenrad 20. Hierzu ist am Stopfen 39 ein Gleitstein 41 angeordnet, der in eine im Planetenträger 21 eingestochene Ringnut 42 hineinragt. Der Gleitstein 41 besteht aus zwei Gleitsteinteilen 411, 412, die durch eine dazwischenliegende Druckfeder 43 voneinander abgespreizt werden, so daß jeder Gleitsteinteil 411, 412 gegen eine Nutflanke der Ringnut 42 angedrückt wird. Durch diese Anpressung der Gleitsteinteile 411, 412 an die Nutflanken wird die axiale Position des Schneckenrads 20 festgelegt und dafür gesorgt, daß das Schneckenrad 20 immer axial spielfrei geführt ist. Durch diese Anfederung werden auch Bauteiltoleranzen von Gleitstein 41 und Ringnut 42 kompensiert und evtl. auftretender Verschleiß minimiert. Diese konstruktive Ausbildung der Axialführung des Schneckenrads 20 ist einfach, kostengünstig und montagefreudlich. Das bei der Axialführung erzeugte Reibmoment wird direkt am Stellergehäuse 11 abgestützt. Das Reibmoment muß vom Elektromotor aufgebracht werden, während der normale Durchtrieb von der ersten Eingangswelle 12 zur Ausgangswelle 13 nicht mit dem Reibmoment beaufschlagt wird, so daß die Reibung im Lenkungsstrang nicht erhöht wird. Außerdem wird die Toleranzkette zwischen Schnecke 18 und Schneckenrad 20 kleiner, d.h. Schnecke 18 und Schneckenrad 20 können zueinander genauer positioniert werden. Der Stopfen 39 wird bei der Stellgliedmontage als letztes Bauteil montiert. Dadurch kann bei der Montage des Gehäusedeckels 37 bzw. des Elektromotors aus dem Stellergehäuse 11 verdrängte Luft über die Bohrung 38 entweichen und im Stellergehäuse 11 kann sich kein Überdruck aufbauen. Nach diesem Montagevorgang wird das Stellergehäuse 11 durch die Bohrung 37 hindurch mit Öl befüllt und der Stopfen 39 eingesetzt, der damit die Abdichtung des Stellergehäuses 11 als weitere Funktion aufweist.

Auf der Innenseite des Stopfens 39 ist ein Dauermagnet 44 angebracht, der Stahlabrieb des Planetengetriebes 16 bindet, so daß ein geringerer Getriebeverschleiß und eine höhere Standzeit des Stellglieds erreicht wird.

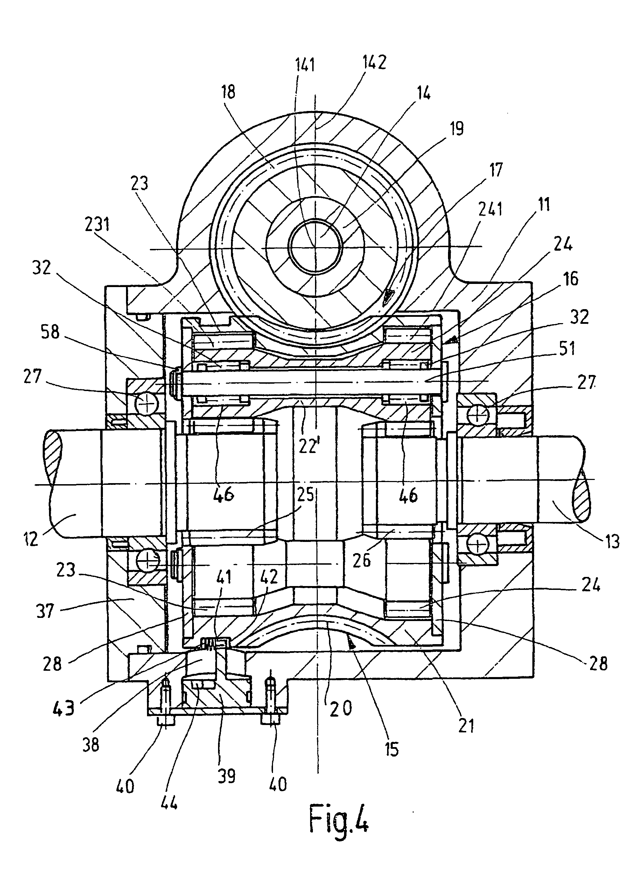

Das in Fig. 4 im Längsschnitt dargestellte Stellglied zum überlagerten Lenkeingriff in einer Fahrzeug-Lenkvorrichtung ist gegenüber dem zuvor beschriebenen Stellglied in mehrerer Hinsicht modifiziert. Bauteile dieses Stellgliedes, die mit Bauteilen in dem zu Fig. 1 beschriebenen Stellglied übereinstimmen, sind mit gleichen Bezugszeichen versehen.

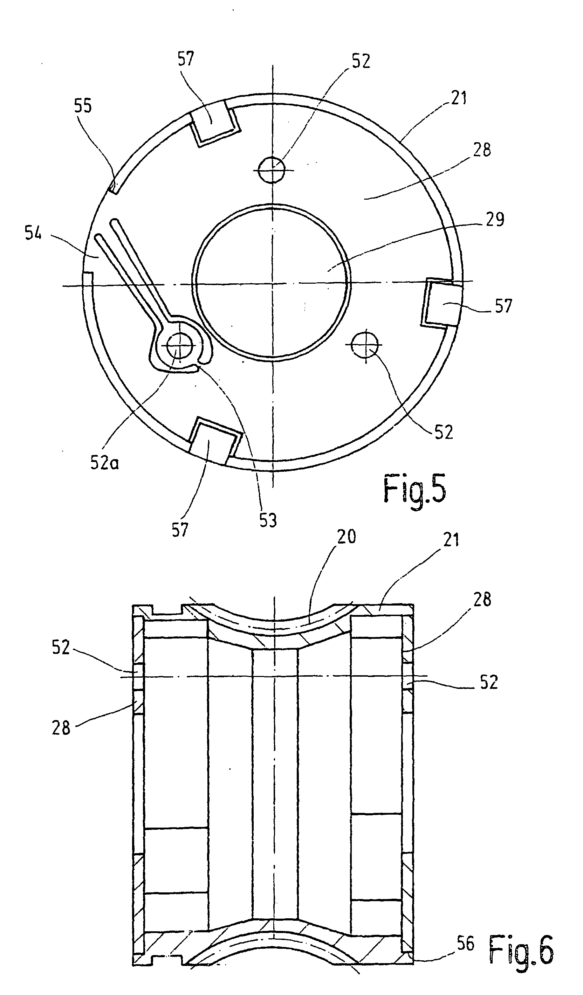

Die Stufenplaneten 22', von denen im Planetengetriebe 16 drei vorgesehen sind, sind hohlzylindrisch ausgebildet und sind mittels der Wälzlager 32 auf einer Steckachse 51 drehgelagert. Die Wälzlager 32 sind als Nadelkränze ausgeführt, die im montierten Zustand in Lagerbohrungen 46 der Stufenplaneten 22 eingeschossen sind und dadurch nicht herauswandern können. Die Lagerbohrungen 46 sind in die Innenwand des Stufenplaneten 22 im Bereich der Planetenräder 23, 24 eingebohrt, so daß die Wälzlager 32 unmittelbar die an den Planetenräder 23, 24 angreifenden Radialkräfte aufnehmen. Wie Fig. 5 zeigt, sind in jeder Planetenträgerplatte 28 drei Aufnahmebohrungen 52 um definierte, von 120° geringfügig abweichende Umfangswinkel zueinander versetzt angeordnet, die der Aufnahme der Steckachsen 51 dienen. Eine der Aufnahmebohrungen 52a ist dabei in gleicher Weise radial federnd angeordnet und hierzu auf dem Federarm 33, der aus der Planetenträgerplatte 28 ausgeschnitten ist, angeordnet. Die beiden nichtfedernden Aufnahmebohrungen 52 haben einen gleichen radialen Abstand von der Achse der Planetenträgerplatte 28 und die federnde Aufnahmebohrung 52a einen davon abweichenden Abstand, der im entlasteten Zustand des Federarms 33 kleiner ist. Der Planetenträger 21 mit daran einstückig ausgebildetem Schneckenrad 20 des Schneckengetriebes 17 ist über die Verzahnungen 231, 241 der Planetenräder 23, 24 direkt auf den Sonnenrädern 25, 26 gelagert. Dadurch können die bei dem Stellglied gemäß Fig. 1 vorhandenen Wälzlager 34 eingespart werden, was einen Kostenvorteil mit sich bringt. Dieses Lagerprinzip erfordert das Vorhandensein aller drei Stufenplaneten 22'. Da alle drei Stufenplaneten 22' in die Verzahnungen der Sonnenräder 25, 26 gepreßt werden, haben alle drei Stufenplaneten 22 im angefederten Zustand den gleichen Achsabstand zu den Sonnenrädern 25, 26, so daß eine Leistungsverzweigung über alle drei Stufenplaneten 22' erfolgt und alle drei Stufenplaneten 22' ein Drittel der Gesamtbelastung tragen. Der angefed erte Stufenplanet 22' ist damit gegenüber der Ausführung gemäß Fig. 1 eine r geringeren mechanischen Belastung ausgesetzt, so daß die erforderliche Federkraft des Federarms 33 kleiner gemacht werden kann.

Als weitere Modifizierung sind die ebenfalls aus Federstahl gefertigten Planetenträgerplatten 28, die anders als bei dem Stellglied gemäß Fig. 1 nicht mehr die Wälzlager 32 der Stufenplaneten 22 aufnehmen, sehr dünn ausgeführt, wobei die Plattenstärke kleiner 3 mm gewählt ist. Die Planetenträgerplatten 28 können dadurch in einem Stanzprozeß oder Laserschneidprozeß kostengünstig hergestellt werden. Die Aufnahmebohrungen 52 werden dabei zunächst mit einer ausreichenden Bearbeitungszugabe versehen und der die eine Aufnahmebohrung 52 tragende Federarm 33 bleibt noch mittels eines Stegs 53 fixiert. Die Planetenträgerplatten 28 erhalten darüber hinaus eine Ausbuchtung 54, die sich über einen kleinen Umfangswinkel erstreckt und in eine Aussparung 55 auf der Stirnseite des Planetenträger 21 einlegbar ist. Jede Planetenträgerplatte 28 wird dabei in eine in die Stirnseite des Planetenträgers 21 eingearbeitete koaxiale Ausnehmung 56 eingelegt (Fig. 6). Der Federarm 33 ist bis in die Ausbuchtung 54 hinein verlängert, so daß die Armwurzel 331 in der Ausbuchtung 54 liegt. Diese größere Biegelänge des Federarms 33 kompensiert die aufgrund der geringen Stärke der Planetenträgerplatte 28 zunehmende Biegespannung, so daß mit dem verlängerten Biegearm 33 eine gleiche radiale Federkraft auf den angefederten Stufenplaneten 22 aufgebracht werden kann, wie bei dem Stellglied in Fig. 1. Durch den Formschluß zwischen Aussparung 55 und Ausbuchtung 54 werden die beiden Planetenträgerplatten 28 beim Fügeprozeß zueinander lagerichtig ausgerichtet. Nach dem Fügeprozeß in den hohlzylindrischen Planetenträger 21 werden die Planetenträgerplatten 28 mit dem Planetenträger 21 drehfest verbunden, und zwar durch Verstemmen oder Verschweißen in verschiedenen Positionen. In Fig. 5 sind drei Positionen vorgesehen, die mit 57 bezeichnet sind.

Die so vormontierte Baueinheit aus Planetenträger 21 und Planetenträg erplatten 28 wird nunmehr in einer Aufspannung fertig bearbeitet, wobei die Aufnahmebohrungen 52 in den beiden Planetenträgerplatten 28 auf das Endmaß fertig bearbeitet werden. Dadurch ist sichergestellt, daß die Aufnahmebohrungen 52 exakt miteinander fluchten und eine exakt definierte Position aufweisen. Nach Fertigbearbeitung der Aufnahmebohrungen 52 wird der Steg 55 zwischen Federarm 33 und Planetenträgerplatte 28 durchtrennt, so daß nunmehr die Federarme 33 in beide Planetenträgerplatten 28 federn können. Als letzter Bearbeitungsgang wird das Schneckenrad 20 in den Planetenträger 21 gefräst.

In diese endgefertigte Baueinheit werden nunmehr die vorstehend beschriebenen hohlen Stufenplaneten 22 eingebaut. Diese werden durch die Zentralbohrungen 31 in den Planetenträgerplatten 28 eingeführt und mittels der Steckachsen 51 fixiert bzw. drehgelagert. Eine Axialsicherung 58 an den Steckachsen 51 stellt sicher, daß die Steckachsen 51 axial nicht verschoben werden können.

Das in Fig. 4 dargestellte Stellglied hat gegenüber dem in Fig. 1 dargestellten Stellglied den Vorteil einer geringeren Getriebemasse und einer kürzeren axialen Baulänge.

## Patentansprüche

1. Stelleinrichtung zum überlagerten Lenkeingriff in einer Fahrzeug-Lenkvorrichtung mit einer ersten und zweiten Eingangswelle (12, 14), einer zur ersten Eingangswelle (12) koaxialen Ausgangswelle (13) und einem zwischen den Wellen (12-14) angeordneten, in einem Stellergehäuse (11) aufgenommenen Überlagerungsgetriebe (15), wobei das Überlagerungsgetriebe ( 15) ein zweistufiges, modifiziertes Planetengetriebe (16) aufweist, das ein mit der ersten Eingangswelle (12) drehfest verbundenes erstes Sonnenrad (25), ein mit der Ausgangswelle (13) verbundenes zweites Sonnenrad (26), einen von der zweiten Eingangswelle (14) antreibbaren Planetenträger (21) und mindestens einen am Planetenträger (21) drehbar gehaltenen, einstückigen Stufenplaneten (22; 22') mit zwei voneinander axial beabstandeten, beidseitig eines durchmesserkleineren Wellenabschnitts (221) angeordneten Planetenrädern (23, 24) besitzt, von denen das eine mit dem ersten und das andere mit dem zweiten Sonnenrad (25, 26) kämmt, und wobei zwischen der zweiten Eingangswelle (14) und dem Planetenträger (21) ein selbsthemmendes Schneckengetriebe (17) mit einer drehfest mit der zweiten Eingangswelle (14) verbundenen Schnecke (18) und einem drehfest, vorzugsweise einstückig, mit dem Planetenträger (21) verbundenen Schneckenrad (20) angeordnet ist, **dadurch gekennzeichnet; daß** das Schneckenrad (20) am Planetenträger (21) im Bereich des Wellenabschnitts (221) der Stufenplaneten (22; 22') platziert ist und der Planetenträger (21) hohlzylindrisch ausgebildet ist.

2. Stelleinrichtung nach Anspruch 1, **dadurch gekennzeichnet, dass** der Planetenträger (21) stirnseitig mit je einer Planetenträgerplatte (28) abgedeckt ist und in seinem Inneren den mindestens einen Stufenplaneten (22; 22') und beide Sonnenräder (25, 26) aufweist.

3. Stelleinrichtung nach Anspruch 1 oder 2, **dadurch gekennzeichnet, dass** die Drehlagerung des mindestens einen Stufenplaneten (22; 22') im Inneren des Planetenträgers (21) mittels Wälzlager (32) vorgenommen ist.

4. Stelleinrichtung nach Anspruch 3, **dadurch gekennzeichnet, dass** der mindestens eine Stufenplanet (22) endseitige Lagerzapfen (31) aufweist, die jeweils über ein Wälzlager (32) in einer in die Planetenträgerplatten (28) eingebrachten Lagerbohrung (30a) abgestützt sind und vorzugsweise dass die Wälzlager (32) als geschlitzte Nadelkränze ausgebildet sind, die jeweils in eine in jedem Lagerzapfen (31) eingebrachte Lagernut (35) eingeklipst sind.

5. Stelleinrichtung nach Anspruch 4, **dadurch gekennzeichnet, dass** die Lagerbohrung (30a) in Radialrichtung federnd ausgebildet ist.

6. Stelleinrichtung nach Anspruch 5, **dadurch gekennzeichnet, dass** im Planetenträger (21) mehrere baugleiche Stufenplaneten (22) vorhanden sind, die mit ihren Lagerzapfen (31) in Lagerbohrungen (30) aufgenommen sind, die in jeder Planetenträgerplatte (28) um einen definierten, geringfügig von einer gleichmäßigen Winketteilung abweichenden Umfangswinkel, gegeneinander versetzt angeordnet sind, und in jeder Planetenträgerplatte (28) eine der Lagerbohrungen (30a) in Radialrichtung federnd ausgebildet ist und ihr Radialabstand von der Achse der Planetenträgerplatte (28) von den Radialabständen der beiden anderen Lagerbohrungen (30) von der Achse der Planetenträgerplatte (28) abweicht, die ihrerseits gleich groß sind.

7. Stelleinrichtung nach einem der Ansprüche 2-6, **dadurch gekennzeichnet, dass** die beiden Planetenträgerplatten (28) über einen parallel zur Achse des Stellergehäuses (11) verlaufenden Zentrierstift (36) in Umfangsrichtung zueinander ausgerichtet sind.

8. Stelleinrichtung nach einem der Ansprüche 2-7, **dadurch gekennzeichnet, dass** die erste Eingangswelle (12) und die Ausgangswelle (13) mittels Wälzlager (27), vorzugsweise Kugellager, im Stellergehäuse (11) drehbar gelagert sind, und dass der Planetenträger (21) über je ein in den Planetenträgerplatten (28) angeordnetes Wälzlager (34), vorzugsweise Kugellager, auf der ersten Eingangswelle (12) und der Ausgangswelle (13) abgestützt ist.

9. Stelleinrichtung nach Anspruch 1, **dadurch gekennzeichnet, dass** die Stufenplaneten (22') innen hohl sind und sich jeweils über zwei voneinander maximal beabstandete Wälzlager (32) auf einer in Aufnahmebohrungen (52) in den Planetenträgerplatten (28) gehaltenen Steckachse (51) abstützen.

10. Stelleinrichtung nach Anspruch 9, **dadurch gekennzeichnet, dass** die Wälzlager (32) im Bereich der Planetenräder (23, 24) angeordnet sind.

11. Stelleinrichtung nach Anspruch 9 oder 10, **dadurch gekennzeichnet dass** die erste Eingangswelle (12) und die Ausgangswelle (13) mittels Wälzlager (27), vorzugsweise Kugellager, im Stellergehäuse (11) drehgelagert sind, dass im Planetenträger (21) drei um definierte Umfangswinkel zueinander versetzt angeordnete Stufenplaneten (22') vorhanden sind und dass der Planetenträger (21) über die Verzahnungen (231, 241) der Planetenräder (23, 24) der drei Stufenplaneten (22') auf den beiden Sonnenrädern (25, 26) drehgelagert ist.

12. Stelleinrichtung nach einem der Ansprüche 9-11, **dadurch gekennzeichnet, dass** in jeder Planetenträgerplatte (28) eine der Aufnahmebohrungen (52a) für die Steckachsen (51) in Radialrichtung federnd ausgebildet ist und ihr Radialabstand von der Achse der Planetenträgerplatte (28) von den Radialabständen der beiden anderen Aufnahmebohrungen (52) von der Achse der Planetenträgerplatte (28) abweicht, die ihrerseits gleich groß sind.

13. Stelleinrichtung nach einem der Ansprüche 9-12, **dadurch gekennzeichnet, dass** die Wälzlager (32) der Stufenplaneten (22') von Nadelkränzen gebildet sind, die jeweils in eine in den Stufenplaneten (22') von jeder Stirnseite her eingebrachte Lagerbohrung (46) eingeschoben sind.

14. Stelleinrichtung nach einem der Ansprüche 1-13, **dadurch gekennzeichnet; dass** die Sonnenräder (25, 26) Verzahnungen aufweisen, deren Zähne längsballig ausgebildet sind.

15. Stelleinrichtung nach einem der Ansprüche 2-14, **dadurch gekennzeichnet, dass** die Planetenträgerplatten (28) aus gehärtetem Federstahl gefertigt sind.

16. Stelleinrichtung nach einem der Ansprüche 2-15, **dadurch gekennzeichnet, dass** jede Planetenträgerplatte (28) eine Zentralbohrung (29) aufweist, deren Durchmesser mindestens so groß bemessen ist, dass bei vormontierten Stufenplaneten (22; 22') die Sonnenräder (25, 26) mit ihren Verzahnungen in die Verzahnungen (231, 241) der Planetenräder (23, 24) einschiebbar sind.

17. Stelleinrichtung nach Anspruch 16, **dadurch gekennzeichnet, dass** die Verzahnungen der Sonnenränder (25, 26) an dem in Einschubrichtung weisenden freien Ende der Sonnenräder (25, 26) angefast sind.

18. Stelleinrichtung nach einem der Ansprüche 9-17, **dadurch gekennzeichnet, dass** die Planetenträgerplatten (28) eine geringe Plattenstärke aufweisen, die vorzugsweise kleiner als 3 mm ist.

19. Stelleinrichtung nach einem der Ansprüche 9-18, **dadurch gekennzeichnet, dass** die Planetenträgerplatten (28) in Umfangsrichtung zueinander ausgerichtet und mit dem Planetenträger (21) drehfest, z.B. durch Verstemmen oder Verschweißen, verbunden sind.

20. Stelleinrichtung nach einem der Ansprüche 9-19, **dadurch gekennzeichnet, dass** die Aufnahmebohrungen (52) in die Planetenträgerplatten (28) mit gegenüber dem Endmaß kleinerem Durchmesser eingearbeitet sind und dass nach dem Fügen der Planetenträgerplatten (28) in den Planetenträger (21) die Aufnahmebohrungen (52) auf das Endmaß fertig bearbeitet werden.

21. Stelleinrichtung nach einem der Ansprüche 6-20, **dadurch gekennzeichnet, dass** die radial federnde Ausbildung der Lagerbohrung (30a) bzw. der Aufnahmebohrungen (52a) für die Lagerzapfen (31) bzw. die Steckachsen (51) der Stufenplaneten (22') durch einen die Lager- bzw. Aufnahmebohrung (30a; 52a) tragenden Federarm (33) realisiert ist, der aus der Planetenträgerplatte (28) so ausgeschnitten ist, dass sein Armquerschnitt von dem die Lager- bzw. Aufnahmebohrung (30a; 52a) tragenden freien Ende zu einer mit der Planetenträgerplatte (28) verbundenen Armwurzel (331) hin zunimmt.

22. Stelleinrichtung nach Anspruch 21, **dadurch gekennzeichnet, dass** jede Planetenträgerplatte (28) in einer in den Stirnseiten der Planetenträger (21) eingearbeiteten Ausnehmung (56) eingesetzt ist und jede Planetenträgerplatte (28) eine über einen kleinen Umfangswinkel sich erstreckende Ausbuchtung (54) aufweist, die in eine Aussparung (55) im Planetenträger (21) formschlüssig eingreift, und dass die Armwurzel (331) in der Ausbuchtung (54) liegt.

23. Stelleinrichtung nach einem der Ansprüche 1-22, **dadurch gekennzeichnet, dass** das Stellergehäuse (11) mittels eines Gehäusedeckels (37) flüssigkeitsdicht abgeschlossen ist, dass in das Stellergehäuse (11) eine Bohrung (38), vorzugsweise parallel zur zweiten Eingangswelle (14),eingebracht ist und dass die Bohrung (38) mittels eines Stopfens (39) verschlossen ist.

24. Stelleinrichtung nach Anspruch 23, **dadurch gekennzeichnet, dass** die Achse (341) der Bohrung (38) einen toleranzengen Axialabstand von einer durch die Achse (141) der zweiten Eingangswelle (14) hindurchgehenden Ebene (142) aufweist.

25. Stelleinrichtung nach Anspruch 23 oder 24, **dadurch gekennzeichnet, dass** am, Stopfen (39) ein Gleitstein (41) ausgebildet ist, der in eine außen im Planetenträger (21) umlaufende Ringnut (42) eingreift und sich federnd an beiden Nutflanken der Ringnut (42) abstützt.

26. Stelleinrichtung nach Anspruch 25, **dadurch gekennzeichnet, dass** der Gleitstein (41) zwei Gleitsteinteile (441, 412) aufweist, die durch eine zwischen ihnen angeordnete. Druckfeder (43) in Axialrichtung auseinander gespreizt werden.

27. Stelleinrichtung nach einem der Ansprüche 23-26, **dadurch gekennzeichnet, dass** an der Innenseite des Stopfens (39) ein Dauermagnet (44) angeordnet ist.

## Claims

1. Actuating device for superimposed steering intervention in a vehicle steering apparatus, having a first and second input shaft (12, 14), an output shaft (13) which is coaxial to the first input shaft (12), and a variable-ratio gear unit (15) which is arranged between the shafts (12 - 14) and accommodated in an actuator housing (11), the variable-ratio gear unit (15) having a two-stage, modified planetary gear mechanism (16) which has a first sun gear (25) which is connected fixedly to the first input shaft (12) so as to rotate with it, a second sun gear (26) which is connected to the output shaft (13), a planetary carrier (21) which can be driven by the second input shaft (14) and at least one one-piece multi-step planet (22; 22') which is held rotatably on the planetary carrier (21) and has two planetary gears (23, 24) which are axially spaced apart from one another, arranged on both sides of a shaft section (221) having a reduced diameter, and of which one meshes with the first sun gear (25) and the other meshes with the second sun gear (26), and a self-locking worm gear mechanism (17) being arranged between the second input shaft (14) and the planetary carrier (21) and having a worm (18) which is connected fixedly to the second input shaft (14) so as to rotate with it and a worm gear (20) which is fixedly, preferably integrally, connected to the planetary carrier (21) so as to rotate with it, **characterized in that** the worm gear (20) is placed on the planetary carrier (21) in the region of the shaft section (221) of the multi-step planets (22; 22') and the planetary carrier (22) is of hollow-cylindrical design.

2. Actuating device according to Claim 1, **characterized in that** the ends of the planetary carrier (21) are each covered with a planetary-carrier plate (28) and the interior of the said planetary carrier (21) has the at least one multi-step planet (22; 22') and both sun gears (25, 26).

3. Actuating device according to Claim 1 or 2, **characterized in that** the at least one multi-step planet (22; 22') is rotationally mounted in the interior of the planetary carrier (21) by means of roller bearings (32).

4. Actuating device according to Claim 3, **characterized in that** the at least one multi-step planet (22) has end-side bearing journals (31) which are each supported via a roller bearing (32) in a bearing hole (30a) made in the planetary-carrier plates (28), and preferably **in that** the roller bearings (32) are configured as slotted needle rings which are each clipped into a bearing groove (35) made in each bearing journal (31).

5. Actuating device according to Claim 4, **characterized in that** the bearing hole (30a) is configured to be , resilient in the radial direction.

6. Actuating device according to Claim 5, **characterized in that** there are a plurality of multi-step planets (22) of identical construction in the planetary carrier (21), the bearing journals (31) of the said multi-step planets (22) being accommodated in bearing holes (30) which are arranged in each planetary-carrier plate (28) offset with respect to one another by a defined circumferential angle which deviates slightly from a uniform angular pitch, and one of the bearing holes (30a) in each planetary-carrier plate (28) is configured to be resilient in the radial direction and its radial spacing from the axis of the planetary-carrier plate (28) differs from the radial spacings of the two other bearing holes (30) from the axis of the planetary-carrier plate (28) which for their part are equally great.

7. Actuating device according to one of Claims 2 to 6, **characterized in that** the two planetary-carrier plates (28) are aligned towards one another in the circumferential direction via a centring pin (36) which extends parallel to the axis of the actuator housing (11).

8. Actuating device according to one of Claims 2 to 7, **characterized in that** the first input shaft (12) and the output shaft (13) are rotatably mounted in the actuator housing (11) by means of roller bearings (27), preferably ball bearings, and **in that** the planetary carrier (21) is supported on the first input shaft (12) and the output shaft (13) via in each case one roller bearing (34), preferably ball bearing, arranged in the planetary-carrier plates (28).

9. Actuating device according to Claim 1, **characterized in that** the multi-step planets (22') have hollow interiors and are supported in each case via two roller bearings (32) arranged at a maximum distance from one another on a plug-in axle (51) which is held in receptacle holes (52) in the planetary-carrier plates (28).

10. Actuating device according to Claim 9, **characterized in that** the roller bearings (32) are arranged in the region of the planetary gears (23, 24).

11. Actuating device according to Claim 9 or 10, **characterized in that** the first input shaft (12) and the output shaft (13) are rotationally mounted in the actuator housing (11) by means of roller bearings (27), preferably ball bearings, **in that** there are three multi-step planets (22') in the planetary carrier (21) which are arranged offset by defined circumferential angles to one another, and **in that** the planetary carrier (21) is rotationally mounted on the two sun gears (25, 26) via the toothing systems (231, 241) of the planetary gears (23, 24) of the three multi-step planets (22').

12. Actuating device according to one of Claims 9 to 11, **characterized in that** one of the receptacle holes (52a) for the plug-in axles (51) in each planetary-carrier plate (28) is configured to be resilient in the radial direction and its radial spacing from the axis of the planetary-carrier plate (28) differs from the radial spacings of the two other receptacle holes (52) from the axis of the planetary-carrier plate (28) which for their part are equally great.

13. Actuating device according to one of Claims 9 to 12, **characterized in that** the roller bearings (32) of the multi-step planets (22') are formed by needle rings which are each inserted into a bearing hole (46) made in the multi-step planets (22') from each end.

14. Actuating device according to one of Claims 1 to 13, **characterized in that** the sun gears (25, 26) have toothing systems whose teeth are configured to be longitudinally cambered.

15. Actuating device according to one of Claims 2 to 14, **characterized in that** the planetary-carrier plates (28) are manufactured from hardened spring steel.

16. Actuating device according to one of Claims 2 to 15, **characterized in that** each planetary-carrier plate (28) has a central hole (29) whose diameter is at least large enough that the sun gears (25, 26) with their toothing systems can be pushed into the toothing systems (231, 241) of the planetary gears (23, 24) after the multi-step planets (22; 22') have been pre-assembled.

17. Actuating device according to Claim 16, **characterized in that** the toothing systems of the sun gears (25, 26) are bevelled at the free end of the sun gears (25, 26) which points in the direction of insertion.

18. Actuating device according to one of Claims 9 to 17, **characterized in that** the planetary-carrier plates (28) have a small plate thickness which is preferably less than 3 mm.

19. Actuating device according to one of Claims 9 to 18, **characterized in that** the planetary-carrier plates (28) are aligned with respect to one another in the circumferential direction and are connected fixedly to the planetary carrier (21) so as to rotate with it, for example by caulking or welding.

20. Actuating device according to one of Claims 9 to 19, **characterized in that** the receptacle holes (52) are machined into the planetary-carrier plates (28) with a diameter that is smaller than the final dimensions, and **in that** the receptacle holes (52) are finally machined to the final dimensions after the planetary-carrier plates (28) are joined to the planetary carrier (21).

21. Actuating device according to one of Claims 6 to 20, **characterized in that** the radially resilient configuration of the bearing hole (30a) and the receptacle holes (52a) for the bearing journals (31) and the plug-in axles (51) of the multi-step planets (22'), respectively, is realized by a spring arm (33) which bears the bearing and receptacle hole (30a; 52a) and is cut out of the planetary-carrier plate (28) in such a way that its arm cross section increases from the free end which bears the bearing and receptacle hole (30a; 52a) towards an arm root (331) which is connected to the planetary-carrier plate (28).

22. Actuating device according to Claim 21, **characterized in that** each planetary-carrier plate (28) is inserted in a recess (56) which is machined in the ends of the planetary carriers (21) and each planetary-carrier plate (28) has a bulge (54) which extends over a small circumferential angle and engages into a cut-out (55) in the planetary carrier (21) with a form-fitting connection, and **in that** the arm root (331) lies in the bulge (54).

23. Actuating device according to one of Claims 1 to 22, **characterized in that** the actuator housing (11) is closed off in a liquid-tight manner by means of a housing cover (37), **in that** a hole (38) is made in the actuator housing (11), preferably parallel to the second input shaft (14), and **in that** the hole (38) is closed off by means of a plug (39).

24. Actuating device according to Claim 23, **characterized in that** the axis (341) of the hole (38) has a low-tolerance axial spacing from a plane (142) which passes through the axis (141) of the second input shaft (14).

25. Actuating device according to Claim 23 or 24, **characterized in that** a sliding block (41) is formed on the plug (39), which sliding block (41) engages into an annular groove (42), which extends around the outside in the planetary carrier (21), and is supported resiliently on both groove flanks of the annular groove (42).

26. Actuating device according to Claim 25, **characterized in that** the sliding block (41) has two sliding-block parts (411, 412) which are spread apart from one another in the axial direction by a compression spring (43) which is arranged between them.

27. Actuating device according to one of Claims 23 to 26, **characterized in that** a permanent magnet (44) is arranged on the inner side of the plug (39).

## Revendications

1. Installation d'actionnement pour une action de direction combinée sur un dispositif de direction d'un véhicule comprenant un premier et un second arbre d'entrée (12, 14), un arbre de sortie (13) coaxial au premier arbre d'entrée (12) et une transmission de combinaison (15) montée entre les arbres (12, 14) dans le boîtier (11) de l'actionneur, la transmission de combinaison (15) comportant une transmission planétaire (16) modifiée, à deux étages, ayant une première roue solaire (25) solidaire en rotation du premier arbre d'entrée (12) et une seconde roue solaire (26) reliée à l'arbre de sortie (13), un support de pignon planétaire (21) entraîné par le second arbre d'entrée (14) et au moins un pignon planétaire étagé (22, 22') en une seule pièce, monté à rotation sur la cage de transmission planétaire (21), les pignons étagés ayant deux pignons planétaires (23, 24) écartés coaxialement de part et d'autre d'un segment d'arbre (221) de diamètre plus petit, l'un des pignons planétaires engrenant avec la première roue solaire (25) et l'autre pignon planétaire engrenant avec la seconde roue solidaire (26) et une transmission à vis (17) autoblocante est montée entre le second arbre d'entrée (14) et la cage de transmission planétaire (21), cette transmission à vis ayant une vis (18) solidaire en rotation du second arbre d'entrée (14) et une roue à vis (20) solidaire de la cage (21) et de préférence en une seule pièce avec celle-ci (21),
**caractérisée en ce que**
la roue à vis (20) est montée sur la cage de transmission planétaire (21) au niveau du segment d'arbre (221) des pignons planétaires étagés (22, 22') et
la cage de transmission planétaire (21) est de forme cylindrique creuse.

2. Installation d'actionnement selon la revendication 1,
**caractérisée en ce que**
la cage de transmission planétaire (21) est couverte sur sa face frontale d'une plaque de cage (28) respective et elle reçoit à l'intérieur au moins un pignon planétaire étagé (22, 22') et les deux roues solaires (25, 26).

3. Installation d'actionnement selon la revendication 1 ou 2,
**caractérisée en ce que**
le montage à rotation d'au moins un pignon planétaire étagé (22, 22') est fait à l'intérieur de la cage de transmission planétaire (21) à l'aide d'un palier de roulement (32).

4. Installation d'actionnement selon la revendication 3,
**caractérisée en ce qu'**
au moins un pignon planétaire étagé (22) comporte des tourillons de palier d'extrémité (31), montés respectivement par l'intermédiaire d'un palier de roulement (32) dans un perçage de palier (30a) réalisé dans les plaques (28) de la cage de transmission, et de préférence les paliers à roulement (32) sont des couronnes d'aiguilles, fendues, enclipsées chacune dans une rainure de palier (35) réalisée dans chaque tourillon de palier (31).

5. Installation d'actionnement selon la revendication 4,
**caractérisée en ce que**
le perçage de palier (30a) est réalisé de manière élastique comme un ressort dans la direction radiale.

6. Installation d'actionnement selon la revendication 5,
**caractérisée en ce que**
la cage de transmission planétaire (21) comporte plusieurs pignons planétaires étagés (22) de même construction dont les tourillons de palier (31) sont logés dans des perçages de palier (30) et dans chaque plaque (28) ces perçages sont décalés d'un angle périphérique défini, légèrement différent d'une division angulaire régulière, et dans chaque plaque (28) de la cage de transmission planétaire l'un des perçages de palier (30a) est élastique dans la direction radiale et sa distance radiale par rapport à l'axe de la plaque (28) est différente des distances radiales des deux autres perçages de palier (30) par rapport à l'axe de la plaque (28), ces deux distances étant elles-mêmes identiques.

7. Installation d'actionnement selon l'une des revendications 2 à 6,
**caractérisée en ce que**
les deux plaques de support planétaire (28) sont alignées dans la direction périphérique par une broche de centrage (36) parallèle à l'axe du boîtier (11) de l'installation d'actionnement.

8. Installation d'actionnement selon l'une des revendications 2 à 7,
**caractérisée en ce que**
le premier arbre d'entrée (12) et l'arbre de sortie (13) sont montés à rotation à l'aide de paliers à roulement (27), de préférence des paliers à billes, dans le boîtier (11) et la cage de transmission planétaire (21) s'appuie sur le premier arbre d'entrée (12) et sur l'arbre de sortie (13) chaque fois par un palier à roulement (34), notamment un roulement à billes, dans les plaques (28) de la cage de transmission planétaire.

9. Installation d'actionnement selon la revendication 1,
**caractérisée en ce que**
les pignons planétaires étagés (22') sont intérieurement creux et s'appuient chaque fois par deux paliers à roulement (32) écartés au maximum sur un axe enfiché (51) tenu dans les perçages de réception (52) des plaques (28) de la cage de transmission planétaire.

10. Installation d'actionnement selon la revendication 9,
**caractérisée en ce que**
les paliers à roulement (32) sont installés au niveau des roues planétaires (23, 24).

11. Installation d'actionnement selon la revendication 9 ou 10,
**caractérisée en ce que**
le premier arbre d'entrée (12) et l'arbre de sortie (13) sont montés à rotation dans le boîtier (11) de l'installation par l'intermédiaire de paliers à roulement (27), de préférence des paliers à billes, et la cage de transmission planétaire (21) comporte trois pignons planétaires étagés (22') décalés d'un angle périphérique défini et la cage (21) est montée à rotation par les dentures (231, 241) des pignons planétaires (23, 24) des deux pignons planétaires étagés (22') sur les deux roues solaires (25, 26).

12. Installation d'actionnement selon l'une des revendications 9 à 11,
**caractérisée en ce que**
dans chaque plaque (28) de la cage de transmission planétaire on a réalisé l'un des perçages de réception (52a) pour les axes d'enfichage (51), élastiques dans la direction radiale et sa distance radiale par rapport à l'axe de la plaque (28) de la cage de transmission est différente de la distance axiale des deux autres perçages de réception (52) de l'axe de la plaque (28), ces deux dernières distances étant égales.

13. Installation d'actionnement selon l'une des revendications 9 à 12,
**caractérisée en ce que**
les paliers à roulement (32) des pignons planétaires étagés (22') sont formés par des couronnes d'aiguilles insérées chaque fois dans un perçage de palier (46) réalisé dans les pignons planétaires étagés (22') en partant de chaque face frontale.

14. Installation d'actionnement selon l'une des revendications 1 à 13,
**caractérisée en ce que**
les roues solaires (25, 26) ont des dentures dont les dents sont bombées longitudinalement.

15. Installation d'actionnement selon l'une des revendications 2 à 14,
**caractérisée en ce que**
les plaques (28) sont en acier à ressort traité.

16. Installation d'actionnement selon l'une des revendications 2 à 15,
**caractérisée en ce que**
chaque plaque (28) de la cage de transmission planétaire comporte un perçage central (29) dont le diamètre est au moins suffisamment grand pour permettre aux pignons planétaires étagés préassemblés (22, 22'), aux roues solaires (25, 26) avec leurs dentures d'être engagées dans les dentures (231, 241) des pignons planétaires (23, 24).

17. Installation d'actionnement selon la revendication 16,
**caractérisée en ce que**
les dentures des roues solaires (25, 26) ont une extrémité libre tournée dans la direction d'engagement qui comporte un congé.

18. Installation d'actionnement selon l'une des revendications 9 à 17,
**caractérisée en ce que**
les plaques (28) de la cage de transmission planétaire ont une faible épaisseur, de préférence inférieure à 3 mm.

19. Installation d'actionnement selon l'une des revendications 9 à 18,
**caractérisée en ce que**
les plaques (28) de la cage de transmission planétaire sont alignées l'une sur l'autre dans la direction périphérique et sont solidaires en rotation de la cage de transmission planétaire (21), par exemple par matage ou soudage.

20. Installation d'actionnement selon l'une des revendications 9 à 19,
**caractérisée en ce que**
les perçages de réception (52) sont usinés dans les plaques (28) de la cage de transmission planétaire avec un diamètre plus faible par rapport à la mesure finale et après assemblage des plaques (28) dans la cage de transmission planétaire (21), on termine l'usinage de finition des perçages de réception (52) à leur dimension finale.

21. °) Installation d'actionnement selon l'une des revendications 6 à 20,
**caractérisée en ce que**
la réalisation radialement élastique du perçage de palier (30a) ou les perçages de réception (52a) des tourillons de palier (31) ou les axes d'enfichage (51) des pignons planétaires étagés (22') sont réalisés par un bras élastique (33) portant le perçage de palier ou le perçage de réception (30a ; 52a), ce bras élastique étant découpé de la plaque (28) de la cage de façon que la section du bras augmente à partir de l'extrémité libre portant le perçage de palier ou de réception (30a, 52a) jusqu'à une base de bras (331) reliée à la plaque (28) de la cage de transmission planétaire.

22. Installation d'actionnement selon la revendication 21,
**caractérisée en ce que**
chaque plaque de support planétaire (28) est logée dans une cavité (56) usinée dans l'une des faces frontales de la cage de transmission planétaire (21) et chaque plaque (28) comporte un bossage (54) qui s'étend sur un petit angle périphérique, et ce bossage pénètre dans une cavité (55) de la cage (21) par une liaison par la forme et la base (331) du bras se situe dans le bossage (54).

23. Installation d'actionnement selon l'une des revendications 1 à 22,
**caractérisée en ce que**
le boîtier (11) est fermé de manière étanche au liquide par un couvercle (37),
le boîtier (11) de l'installation comporte un perçage (38), de préférence parallèle au second arbre d'entrée (14) et
le perçage (38) est fermé à l'aide d'un bouchon (39).

24. Installation d'actionnement selon la revendication 23,
**caractérisée en ce que**
l'axe (341) du perçage (38) présente une distance axiale à tolérance étroite par rapport à un plan (142) passant par l'axe (141) du second arbre d'entrée (14).

25. Installation d'actionnement selon la revendication 23 ou 24,
**caractérisée en ce qu'**
un galet de glissement (41) est réalisé sur le bouchon (39) qui pénètre dans une rainure annulaire (42) périphérique extérieure de la cage de transmission planétaire (21) et s'appuie élastiquement contre les deux flancs de la rainure annulaire (42).

26. Installation d'actionnement selon la revendication 25,
**caractérisée en ce que**
le galet (41) comporte deux parties (411, 412) écartées dans la direction axiale par un ressort de compression (43) interposé entre ces deux parties.

27. Installation d'actionnement selon l'une des revendications 23-26,
**caractérisée par**
un aimant permanent (44) prévu sur le côté intérieur du bouchon (39).
